Europäisches Patentamt

European Patent Office

Office européen des brevets

(11) Numéro de publication: **0 072 287**
A1

(12) **DEMANDE DE BREVET EUROPEEN**

(21) Numéro de dépôt: 82401391.6

(22) Date de dépôt: 27.07.82

(51) Int. Cl.³: **G 10 K 11/34**, G 01 S 7/52

(30) Priorité: 07.08.81 FR 8115363

(43) Date de publication de la demande: 16.02.83
Bulletin 83/7

(84) Etats contractants désignés: DE GB IT NL

(71) Demandeur: THOMSON-CSF, 173, Boulevard
Haussmann, F-75379 Paris Cedex 08 (FR)

(72) Inventeur: Buhart, André, THOMSON-CSF SCPI 173, bld
Haussmann, F-75379 Paris Cedex 08 (FR)

(54) Système de formation de voies pour sonars panoramiques.

(57)  Dispositif de formation de voies pour sonar panoramique fournissant séquentiellement des voies sur 360°, à partir
d'une base circulaire de N capteurs, une voie étant formée à
partir de M capteurs.

Les signaux reçus par les N capteurs sont multiplexés
($S_m$) et appliqués à deux sous-ensembles ($F_1$, $F_2$). Un sous-
ensemble est composé de registres à décalage correspondant à N et N-1 cellules ($C_N$, $C_{N-1}$), l'autre sous-ensemble est
composé de registres à décalage correspondant à N et N+1
cellules ($C_N$, $C_{N+1}$).

Des prises sur les sous-ensembles ($F_1$, $F_2$) permettent
d'obtenir les signaux retardés correspondant aux M capteurs. Les signaux sont sommés (100) fournissant séquentiellement les voies.

Application à la détection sous-marine.

EP 0 072 287 A1

## SYSTEME DE FORMATION DE VOIES
## POUR SONARS PANORAMIQUES.

La présente invention se rapporte à la formation de voies d'un sonar panoramique, équipé d'une base d'écoute circulaire. La formation des voies est obtenue par la technique des "dispositifs à transfert de charge" appelée DTC.

Une voie préformée correspond à une réception des signaux acoustiques autour d'une direction. Elle est obtenue par compensation des retards relatifs, par rapport à cette direction, des signaux électriques fournis par les transducteurs formant la base d'écoute. Ces retards sont obtenus par des lignes à retard et en particulier par des registres à décalages numériques ou analogique par DTC.

L'avantage de l'utilisation des DTC par rapport aux dispositifs numériques est dû au fait que pour les DTC les signaux sont traités sous la forme l'échantillons analogiques. Il en résulte une simplification du matériel, puisque dans les systèmes numériques il faut autant de registres à décalage que de bits résultant de la quantification des amplitudes. De plus, la technique DTC permet la suppression des convertisseurs analogique-numérique et numérique-analogique qui sont coûteux, et réduisent le rapport signal sur bruit.

Dans cette technique de formation de voies par DTC les signaux reçus par les différents transducteurs formant la base d'écoute peuvent être traités en parallèle ; ceci a pour inconvénient de nécessiter autant de registres à décalage DTC que de transducteurs. Il est donc plus intéressant de traiter ces signaux en série, par multiplexage.

Pour le traitement des signaux en série suivant l'art antérieur, les retards sont obtenus par des prises sur le registre à décalage DTC qui reçoit les signaux multiplexés. Ces prises fournissent des signaux échantillonnés correspondant à des transducteurs tous différents, et disposées de façon à fournir les retards nécessaires à la formation des voies.

Les voies sont formées par addition des signaux retardés, les voies sont obtenues séquentiellement, quand les échantillons avancent dans le registre à décalage DTC.

Un exemple de formation de voies par DTC est donné dans la demande de brevet européen N° de publication 007 864 publié le 6 février 1980.

Dans cette demande de brevet certaines voies sont obtenues par interpolation.

Pour ces dispositifs il faut réaliser des DTC avec des prises multiples disposés en des positions précises qui dépendent des caractéristiques du sonar, et notamment des diamètres de la base d'écoute.

Ceci a pour désavantage d'éxiger la réalisation d'une ligne DTC spéciale pour chaque application.

Le dispositif suivant l'invention permet de remédier à cet inconvénient en permettant de n'utiliser que pratiquement des lignes comprenant des modules de N, N-1 et N+1 cellules, qui mis en serie permettent d'obtenir la formation des voies quelque soit notamment le diamètre de la base d'écoute.

. Le dispositif suivant l'invention a de plus l'avantage de permettre une réparation d'une panne, par remplacement d'un module.

Suivant une variante de l'invention principalement dans le cas d'un traitement de N signaux numériques multiplexés a un bit, on réalise les lignes à retard, par une mémoire lecture-écriture, l'écriture se faisant aux adresses fournis par un compteur modulo N, N-1 ou N+1. Dans le premier cas au bout de N bits les bits précédemment inscrits sont réinscrit à la même adresse dans une nouvelle sous-mémoire.Les signaux sortent avec un retard de pN où p est le nombre de sous-mémoires.

Brièvement c'est un dispositf de formation de voies pour sonars panoramiques, comprenant une base circulaire de N capteurs et que les N signaux reçus par les capteurs sont appliqués à un circuit de multiplexage, sous le contrôle d'une horloge H de fréquence $F_e$ et que les signaux multiplexés sont appliqués à des lignes de registres à décalage et que des prises sur cette ligne permettent de recueillir les M signaux retardés correspondant aux M capteurs utilisés pour la formation d'une voie et que les signaux retardés sont appliqués à un circuit sommateur qui fournit séquentiellement les voies, caractérisé par le fait que les signaux retardés sont obtenus par deux lignes de registres à décalage, une ligne étant composée de modules CN de N cellules et de modules $C_{N-1}$ de N-1 cellules et l'autre ·.·· modules $C_N$ de N cellules et de modules $C_{N+1}$ de N+1 cellules.

D'autres caractéristiques et avantages ressortiront de la description qui va suivre, illustrée par les figures qui représentent :

Figure 1    - un schéma d'une base circulaire montrant les différences de marche à compenser pour former une voie.

Figure 2    - un schéma illustrant le changement de la direction des voies.

Figure 3    - un schéma montrant la formation simultanée de deux voies.

Figure 4    - un schéma de principe de formation de voies.

Figure 5    - une ligne DTC avec les prises pour la formation de voies.

Figures 6,7 et 8, la répartition des échantillons des signaux multiplexés dans la ligne DTC.

Figure 9    - les emplacements des prises sur la ligne DTC.

Figure 10    - la réalisation des lignes à retard avec ses prises par utilisation de modules à N, N-1 et N+1 cellules, suivant l'invention.

Figure 11    - un schéma pour la réalisation d'une ligne à retard numérique, suivant l'invention.

Figure 12    - des signaux temporels pour les lignes à retard numériques.

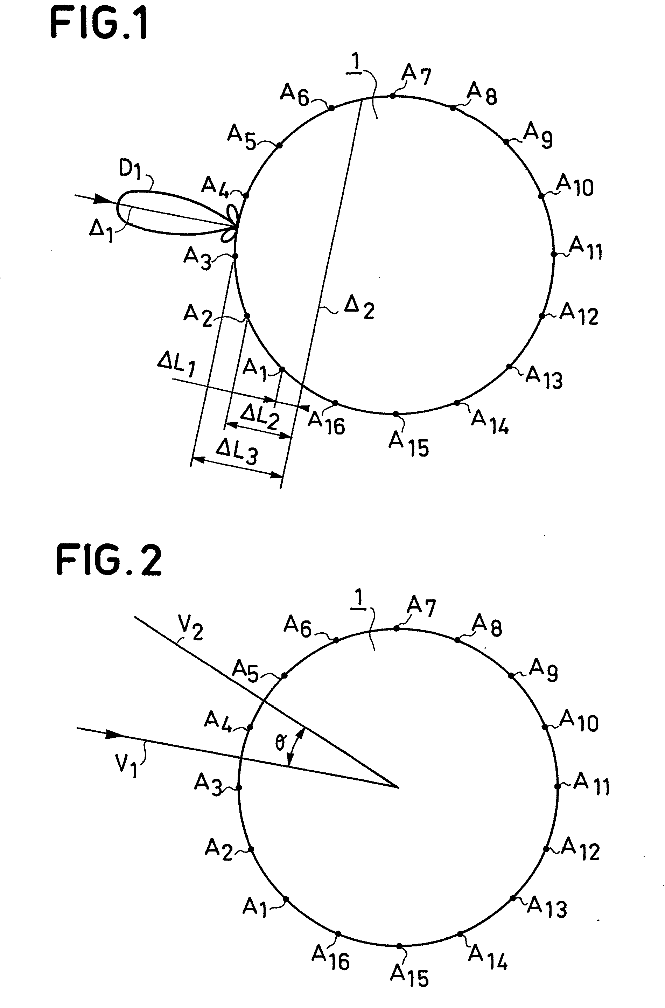

La figure 1 montre une base circulaire 1 équipée de N capteurs transducteurs $A_1$, $A_2$...$A_N$ (sur la figure 1 on a pris N=16). Pour former une voie centrée sur la direction $\Delta_1$, on n'utilise que les signaux reçus par M transducteurs. Pour former la voie montrée sur l'exemple de la figure 1, on utilise les transduceurs $A_1$, $A_2$, $A_3$,$A_4$, $A_5$ et $A_6$ (M=6). Ainsi pour une base d'écoute circulaire, ce sont les transducteurs situés sur un arc correspondant à un secteur d'ouverture 135°, qui participent à la formation d'une voie ayant un diagramme $D_1$. On doit compenser les retards relatifs pour chaque transducteur. Sur la figure on a représenté les différences de marche

4

$\Delta L_1$, $\Delta L_2$, $\Delta L_3$ (M pair) qui sont les distances des transducteurs $A_1$ et $A_6$, $A_2$ et $A_5$, $A_3$ et $A_4$ à une droite $\Delta_2$ perpendiculaire à la direction $\Delta_1$. On en déduit simplement que les retards $\tau_i$ à introduire pour ramener les signaux sur un même plan d'onde virtuel, sont tels que :

$$\tau_i = \Delta L_i / V_c$$

où i est le numéro du capteur et $V_c$ la célérité des ondes. Soit $s_i(t)$ le signal fourni par un capteur, le signal de voie est donné par :

$$V(t) = \sum a_i s_i(t - \tau_i). \qquad a_i : \text{coefficient de pondération éventuel.}$$

Si l'on remplace le signal d'un capteur tel que $A_i$ par le suivant $A_{i+1}$ sur le cercle 1, en gardant les mêmes retards que précédemment, on obtient une autre voie $V_2$ comme montré sur la figure 2, $V_2$ est décalée par rapport à la voie $V_1$ de l'angle $\theta$, qui correspond à l'angle entre deux capteurs successifs.

On forme ainsi séquentiellement N voies uniformément réparties sur 360°.

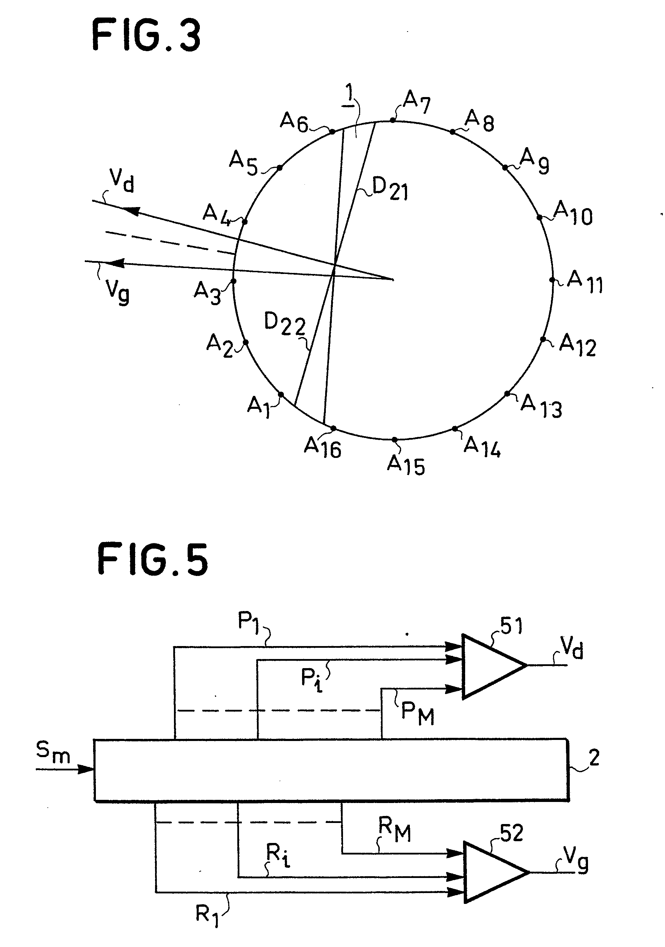

Il est connu de former plus de N voies sur 360°. Comme le montre la figure 3, pour former 2N voies; à chaque voie précédente correspond une voie dite de droite $V_d$ et de gauche $V_g$. Ces deux voies sont obtenues en compensant les retards des capteurs utilisés par rapport aux deux plans d'onde $D_{21}$ et $D_{22}$ perpendiculaires aux directions des voies $V_d$ et $V_g$.

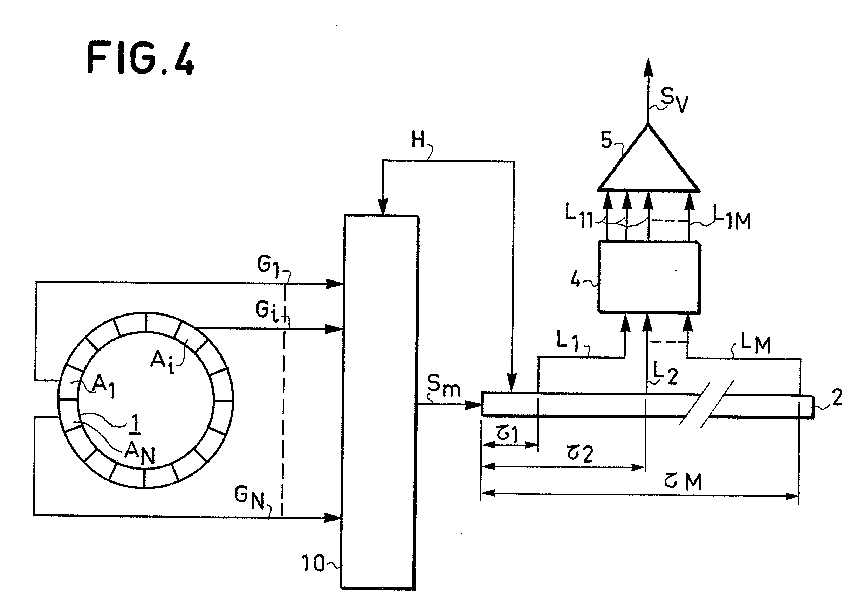

La figure 4 montre le principe connu de l'obtention de voies séquentielles sur 360°.

Les signaux reçus par les capteurs $A_1 \ldots A_i \ldots A_N$ sont appliqués par des liaisons $G_1 \ldots G_i \ldots G_N$ à un dispositif de multiplexage 10 sous le contrôle d'une horloge H à la fréquence $F_e$. Les signaux multiplexés $S_m$ sont appliqués à la ligne DTC 2 où les échantillons analogiques avancent à la cadence $F_e$. Des prises sont disposés sur la ligne 2, pour recueillir les signaux des capteurs successifs avec les retards $\tau_1$, $\tau_2 \ldots \tau_M$. Les signaux retardés sont appliqués à des circuits de filtrage et de pondération 4 et appliqués en $L_{11}$, $L_{12} \ldots L_{1M}$ à un circuit de sommation 5, qui fournit les voies $S_v$, qui se succèdent au rythme $F_e$.

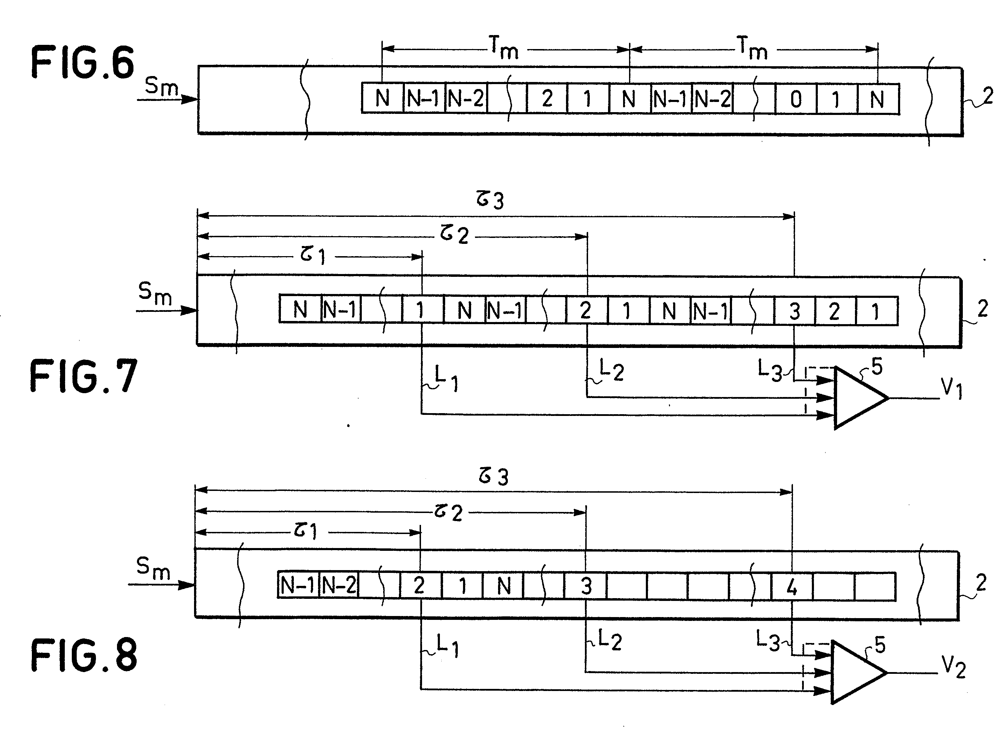

Pour former 2N voies on peut utiliser la même ligne DTC, figure 5, avec les prises $P_1 \ldots P_i \ldots P_M$ pour la voie de droite $V_d$ et des prises $R_1 \ldots$,

$R_1$..., $R_M$ pour les voies de gauche, les voies $V_d$ et $V_g$ étant obtenues après sommation par les sommateurs 51 et 52.

La figure 6 montre comment les échantillons successifs se suivent dans le registre DTC, 2. Des séries d'échantillons $[N]$, $[N-1]$ ...,$[2]$, $[1]$ se succèdent, la durée de passage d'une série étant $T_m = N/F_e$.

A un certain moment $T_o$ figure 7, l'échantillon $[1]$ correspond à la prise $L_1$, l'échantillon $[2]$ à la prise $L_2$ et l'échantillon $[3]$ à la prise $L_3$ etc... Les prises corespondent approximativement aux retards nécessaires 1, 2, 3 etc...

Au temps $T_o + 1/F_e$, figure 8, les échantillons auront avancé d'une case, se seront les échantillons $[2]$, $[3]$, et $[4]$ qui correspondront aux prises $L_1$, $L_2$ $L_3$, et la voie $V_1$ sera remplacée par la voie $V_2$.

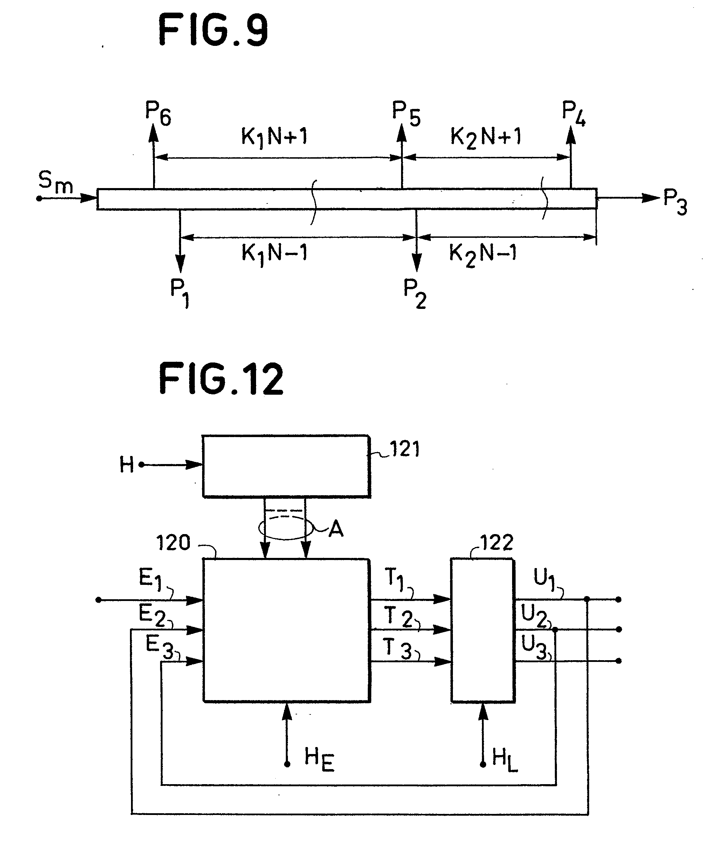

La figure 9 montre le nombre de cellules de la ligne DTC entre deux prises successives, dans le cas de M=6. Entre les prises $P_1$ et $P_2$, il y a $K_1$ N-1 cellules et entre les prises $P_2$ et $P_3$ il y a $K_2$ N-1 cellules $K_1$ et $K_2$ sont des nombres entiers choisis pour obtenir les retards nécessaires. Ces retards doivent tenir compte non seulement des retards géométriques montrés par la figure 1, mais également des retards à l'échantillonnage par le multiplexeur 10 de la figure 4. Les retards augmentent pour les signaux correspondants des capteurs $A_1$ à $A_3$. Par contre les retards diminuent pour les signaux des capteurs de $A_4$ à $A_6$.

Pour les prises $P_4$, $P_5$, $P_6$ correspondant à ces derniers capteurs le nombre de cellules entre prises est de la forme $K_1 N+1$ et $K_2 N+1$.

Le dispositif de prises montré par la figure 9 exige un registre DTC spécialement réalisé pour une application qui dépend du rayon de la base, du nombre M de capteurs utilisés et de la célérité des ondes.

Le dispositif de formation de voies suivant l'invention, permet l'obtention de tous les retards nécessaires avec deux lignes et ne comprenant à part un module, que des modules de N, N-1, et N+1 cellules.

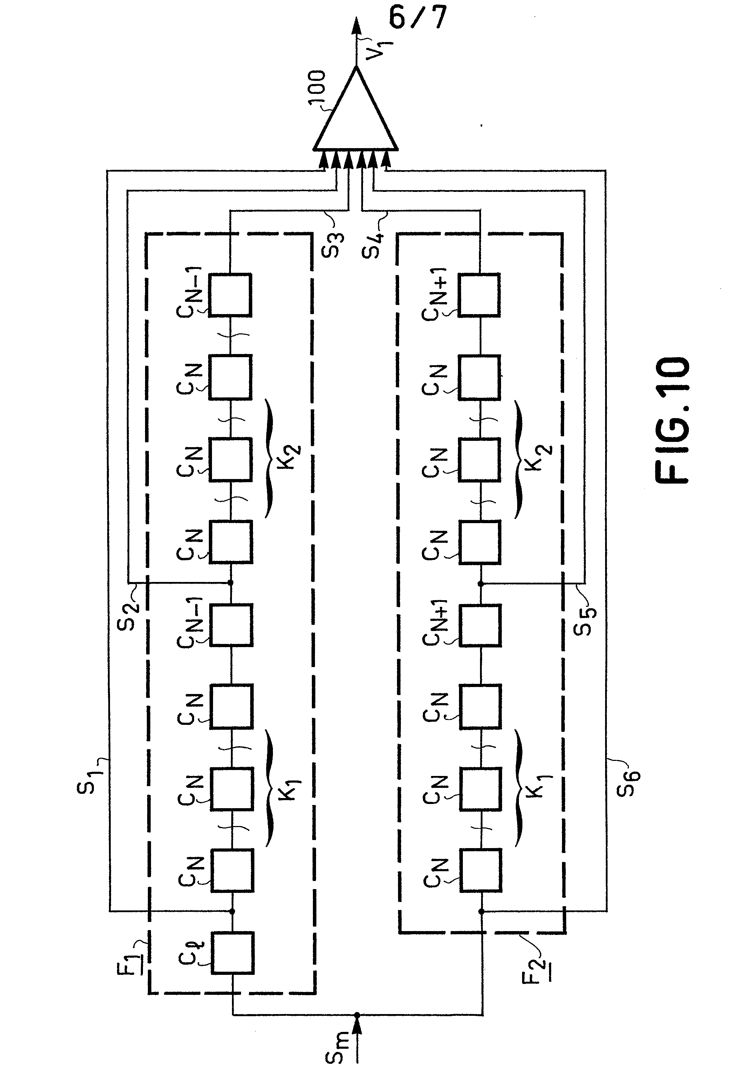

La figure 10 montre le schéma de réalisation des lignes à retard avec ces modules (M=6).

Le signal mutiplexé $S_m$ entre à la fois dans les sous-ensembles $F_1$ et $F_2$. Le sous-ensemble $F_1$ comprend à l'entrée un module $C_\ell$ de $\ell$ cellules, de $K_1$ modules $C_N$ de N cellules, suivi d'un module $C_{N-1}$ de N-1 cellules,

ensuite $K_2$ modules $C_N$ et un module $C_{N-1}$.

Le seul module non-standard dans le sous-ensemble est le premier, qui correspond à la compensation du retard à l'échantillonnage du capteur $A_6$ par rapport au capteur $A_1$.

Le sous-ensemble $F_2$ se compose de $K_1$ modules $C_N$ suivi d'un module $C_{N+1}$ et de $K_2$ modules, $C_N$ suivi d'un module $C_{N+1}$.

Les signaux retardés $S_1$, $S_2$, et $S_3$ prélevés dans les sous-ensemble $F_1$ et les signaux $S_4$, $S_5$ et $S_6$ prélevés dans le sous-ensemble $F_2$ sont additionnés dans le sommateur 100 qui fournit séquentiellement les signaux de voies telle que $V_1$.

Suivant une réalisation, on prend:

Rayon de la base,   $R=1,5m$

Célérité des ondes,   $V_c=1500m/sec$

Pas de quantification des retards,   $1/F_e = 0.5 \,\mu sec$

nombre de capteurs,      $N = 32$

nombre de voies,     $2N = 64$

nombre de capteurs par voie,   $M = 12$.

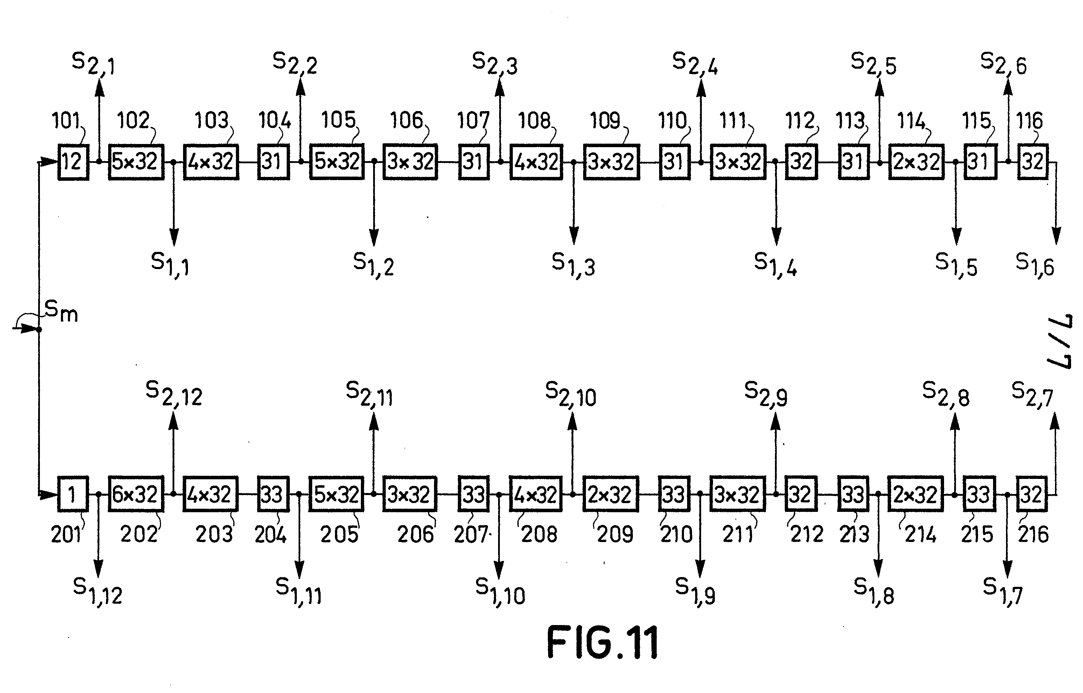

La disposition pour la formation des 64 voies est montrée par la figure 11. Le signal $S_m$ est appliqué à deux lignes, une figurée en haut et l'autre en bas de cette figure. La composition des éléments de la ligne du haut est donnée par le Tableau I, et celle de la ligne du bas par le Tableau II.

La notation $S_{d,i}$ où i est le numéro du capteur, correspond aux prises de la voie de droite et la notation $S_{g,i}$ aux prises de la voie de gauche.

Suivant une variante de l'invention, on utilise une technique numérique pour former les voies. Les signaux provenant des capteurs sont numérisés et les $K_1$ ou $K_2$ modules $C_N$ ou les modules $C_{N-1}$ et $C_{N+1}$ de la figure 10 sont remplacés par un ensemble de traitement montré par la figure 12.

Cet ensemble comporte un compteur 121 pouvant fonctionner modulo N, N-1 ou N+1, une mémoire adressable écriture-lecture (RAM) 120, une mémoire tampon 122 connectée en sortie de la mémoire 120.

Le câblage montré sur la figure 12 se rapporte à la réalisation de 3 modules de traitement $C_N$ de la figure 10 permettant de retarder le signal de sortie de $\frac{3N}{F_e}$ par rapport au signal d'entrée. Le compteur 121 fonctionne modulo N et fournit les adresses A à la mémoire 120. Dans cette mémoire le signal d'entrée appliqué en $E_1$ est retardé de N et le signal $T_1$ résultant est stocké temporairement dans la mémoire tampon 122. Le signal de sortie $U_1$ correspondant est renvoyé dans la mémoire 120 à l'entrée $E_2$ et ainsi de suite. Le signal de sortie $U_3$ est ainsi retardé de $\frac{3N}{F_e}$ par rapport au signal d'entrée.

La mémoire 120 est lue par une horloge $H_E$ et la mémoire tampon par une horloge $H_L$.

Dans le cas des modules $C_{N-1}$ et $C_{N+1}$, le compteur 121 fonctionnera avec un modulo N-1 et N+1.

## TABLEAU I

| Elément (fig.11) | Composition | Prise de sortie |
|---|---|---|
| 101 | 1 module de 12 cellules | |
| 102 | 5 modules de 32 cellules | $S_{g,1}$ |
| 103 | 4 modules de 32 cellules | $S_{d,1}$ |
| 104 | 1 module de 31 cellules | |
| 105 | 5modules de 32 cellules | $S_{g,2}$ |
| 106 | 3 modules de 32 cellules | $S_{d,2}$ |
| 107 | 1 module de 31 cellules | |
| 108 | 4 modules de 32 cellules | $S_{g,3}$ |
| 109 | 3 modules de 3 cellules | $S_{d,3}$ |
| 110 | 1 module de 31 cellules | |
| 111 | 3 modules de 32 cellules | $S_{g,4}$ |
| 112 | 1 module de 32 cellules | $S_{d,4}$ |
| 113 | 1 module de 31 cellules | |
| 114 | 2 modules de 32 cellules | $S_{g,5}$ |
| 115 | 1 module de 31 cellules | $S_{d,5}$ |
| 116 | 1 module de 32 cellules | $S_{g,6}$ $S_{d,6}$ |

## TABLEAU II

| Elément (fig.11) | Composition | Prise de sortie |
|---|---|---|
| 201 | 1 cellule | $S_{d,12}$ |
| 202 | 6 modules de 32 cellules | $S_{g,12}$ |
| 203 | 4 modules de 32 cellules | |
| 204 | 1 module de 33 cellules | $S_{g,11}$ |
| 205 | 5 modules de 32 cellules | $S_{d,11}$ |
| 206 | 3 modules de 32 cellules | |
| 207 | 1 module de 33 cellules | $S_{d,10}$ |
| 208 | 4 modules de 32 cellules | $S_{g,10}$ |
| 209 | 2 modules de 32 cellules | |
| 210 | 1 module de 33 cellules | $S_{d,9}$ |
| 211 | 3 modules de 32 cellules | $S_{g,9}$ |
| 212 | 1 module de 32 cellules | |
| 213 | 1 module de 33 cellules | $S_{d,8}$ |
| 214 | 2 modules de 32 cellules | $S_{g,8}$ |
| 215 | 1 module de 33 cellules | $S_{d,7}$ |
| 216 | 1 module de 32 cellules | $S_{g,7}$ |

REVENDICATIONS

1. Dispositif de formation de voies pour sonars panoramiques, comprenant une base circulaire (1) de N capteurs $A_1$, $A_2$...$A_N$, les N signaux reçus par ces capteurs sont appliqués à un circuit de multiplexage (10) sous le contrôle d'une horloge H de fréquence $F_e$ et les signaux multiplexés ($S_m$) sont appliqués à des lignes (2) de registres à décalage et que des prises ($L_1$,$L_2$...$L_M$) sur cette ligne permettent de recueillir les M signaux retardés correspondant aux M capteurs utilisés pour la formation d'une voie et les signaux resultant sont appliqués à un circuit sommateur (5) qui fournit séquentiellement les voies, caractérisé par le fait que les signaux retardés sont obtenus par deux lignes de registres à décalage (10,11), une ligne étant composée de modules $C_N$ de N cellules et de modules $C_{N-1}$ de N-1 cellules et l'autre de modules $C_N$ de N cellules et de modules $C_{N+1}$ de N+1 cellules.

2. Dispositif de formation de voies pour sonar suivant la revendication 1 caractérisé par le fait que les signaux sont multiplexés sous forme analogique et que les différents modules sont des dispositifs à transfert de charges.

3. Dispositif de formation de voies pour sonar suivant la revendication 1 caractérisé pàr le fait que le signal ($S_m$) est multiplexé sous forme numérique et que les modules ($C_N$, $C_{N-1}$, $C_{N+1}$) sont réalisés par une mémoire écriture-lecture (120) recevant les adresses (A) d'un compteur modulo N, N-1 ou N+1, que cette mémoire (120) permet de retarder le signal de $N/F_e$ ou $(N-1)/F_e$ ou $(N+1)/F_e$, et que un retard de $pN/F_e$ ou $p(N-1)/F_e$ ou $p(N+1)/F_e$ est obtenu en reinscrivant p-1 fois le signal dans la mémoire (120).

4. Dispositif de formation de voies suivant les revendications 2 ou 3 caractérisé par le fait que des prises ($S_{d,i}$, $S_{g,i}$) sont disposées après les modules, pour compenser les retards correspondant simultanément à deux voies, une appelée voie de droite et l'autre voie de gauche.

**FIG.1**

**FIG.2**

# FIG.3

# FIG.5

FIG.4

## FIG.6

## FIG.7

## FIG.8

## FIG.9

## FIG.12

**FIG.10**

6/7

0072287

FIG.11

7/7

0072287

Office européen
des brevets

**RAPPORT DE RECHERCHE EUROPEENNE**

Numéro de la demande

EP  82 40 1391

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-4 003 016  (REMLEY) <br> * colonne  2, ligne 60 à colonne 3, ligne 29; figures 3,5 * | 1,4 | G 10 K   11/34 <br> G 01 S    7/52 |
| Y,D | EP-A-0 007 864  (THOMSON-CSF) <br> * page  6,  ligne  19  à page 8, ligne 8; figures 1-3 * | 1,2 | |
| A | US-A-4 253 168  (PETROSKY et al.) <br> * colonne  3, ligne 38 à colonne 4, ligne 30; figure 5 * | 1,2 | |
| A | GB-A-2 013 446  (RAYTHEON COMP.) <br> * page 4, lignes 2 à 17; page 5, ligne  122  à  page  6, ligne 19; figures 2B,2C * | 1-3 | |

DOMAINES TECHNIQUES
RECHERCHES (Int. Cl. ³)

G 10 K
G 01 S

Le présent rapport de recherche a été établi pour toutes les revendications

| Lieu de la recherche <br> LA HAYE | Date d'achèvement de la recherche <br> 22-10-1982 | Examinateur <br> STUBNER E.B |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82